Europäisches Patentamt

European Patent Office

Office européen des brevets

(19)

(11) Veröffentlichungsnummer : **0 185 163**
**B1**

(12) # EUROPÄISCHE PATENTSCHRIFT

(45) Veröffentlichungstag der Patentschrift :
13.04.88

(21) Anmeldenummer : 85113035.1

(22) Anmeldetag : 15.10.85

(51) Int. Cl.⁴ : **B 23 B 31/04**

(54) **Bohrfutter.**

(30) Priorität : 15.12.84 DE 8436752 U

(43) Veröffentlichungstag der Anmeldung :
25.06.86 Patentblatt 86/26

(45) Bekanntmachung des Hinweises auf die Patenterteilung : 13.04.88 Patentblatt 88/15

(84) Benannte Vertragsstaaten :
CH DE FR GB IT LI

(56) Entgegenhaltungen :
DE-A- 3 133 085

(73) Patentinhaber : **Röhm, Günter Horst**
**Heinrich-Röhm-Strasse 50**
**D-7927 Sontheim (DE)**

(72) Erfinder : **Röhm, Günter Horst**
**Heinrich-Röhm-Strasse 50**
**D-7927 Sontheim (DE)**

(74) Vertreter : **Fay, Hermann, Dipl.-Phys. Dr.**
**Ensingerstrasse 21 Postfach 1767**
**D-7900 Ulm (Donau) (DE)**

## Beschreibung

Die Erfindung betrifft ein Bohrfutter mit einem an eine Bohrspindel anschließbaren Futterkörper, in dem Futterbacken geführt sind, die durch einen am Futterkörper drehbar und axial umverschiebbar geführten Stellring verstellbar sind, und mit einer am Futterkörper axial verschiebbaren und in Drehrichtung begrenzt verstellbaren Sperrhülse zum Verriegeln des Stellrings, wobei die Sperrhülse in Verschiebungsrichtung gegen den Stellring unter der Kraft einer Feder steht und am Futterkörper mindestens ein Anschlagkopf vorgesehen ist, der in eine in der Wand der Sperrhülse vorgesehene Aussparung greift, die aus zwei nebeneinander verlaufenden, verschieden langen axialen Nuten gebildet ist, die an ihrem dem Stellring zugewandten Ende für den Eintritt des Anschlagkopfes offen sind, wozu die Sperrhülse auf dem Futterkörper so verdrehbar ist, daß entweder die eine oder die andere der beiden Nuten mit dem Anschlagkopf axial fluchtet, und wobei der Anschlagkopf in Längsrichtung der Nuten verlängert ist und mit seinen seitlichen Längsflächen Anschläge für die Nutseitenwände bildet.

Befindet sich bei einem solchen Bohrfutter der Anschlagkopf in der längeren von beiden Nuten, so kann sich die Sperrhülse unter der Kraft der Feder soweit gegen den Stellring vorstellen, daß sie am Stellring zum Verriegelungseingriff gelangt und diesen gegen Verdrehen sichert, weil sie selbst durch den Anschlagkopf gegen Drehbewegungen gesperrt ist. Das Bohrfutter kann daher weder gelöst noch gespannt werden, sich aber auch nicht selbst lösen oder nachspannen. Dazu muß vielmehr die Sperrhülse gegen die Kraft der Feder vom Stellring axial zurückgezogen werden, so daß der Verriegelungseingriff aufgehoben wird und der Anschlagkopf aus der Nut austritt. In dieser Stellung kann die Sperrhülse soweit verdreht werden, daß der Anschlagkopf in die kürzere der beiden Nuten eintreten kann. Wird dann die Sperrhülse losgelassen, so setzt sie sich mit dem Ende dieser Nut auf dem Anschlagkopf ab, und zwar axial in einer Stellung, in der sie nach wie vor außer Eingriff am Stellring steht. Der Stellring kann daher nach Wunsch zum Spannen oder Lösen des Bohrfutters verdreht werden.

Die Sicherung eines solchen Bohrfutters nicht nur gegen selbsttätiges Lösen, sondern auch gegen ein selbsttätiges Nachspannen kann in vielen Anwendungsfällen von Nachteil sein. Haben beispielsweise die Futterbacken die Möglichkeit, sich unter der Wirkung der am eingespannten Bohrer auftretenden Kräfte tiefer in den Bohrerschaft einzuarbeiten, so macht sich dies als Lockerung der Einspannung bemerkbar. Zwar kann durch eine selbsttätige Nachspannung diese Lockerung behoben werden, jedoch kann dann, da die Nachspannung nur durch den Bohrerschaft selbst begrenzt ist, nicht ausgeschlossen werden, daß sich infolge wiederholten Nachspannens die Futterbacken tiefer und tiefer in den Bohrerschaft einarbeiten. Vielfach bestehen gegen ein solches Eindringen der Spannbacken in den Bohrerschaft zwar an sich keine Bedenken, aber dieser Vorgang sollte jedenfalls begrenzt werden können, um ein unnötig tiefes Eindringen und damit nachteilige Beeinträchtigungen bzw. Beschädigungen des Bohrerschafts nach Möglichkeit zu vermeiden. Dies gilt vor allem auch dann, wenn zwar ein Eindringen der Spannbacken in den Bohrerschaft so tief erwünscht ist, daß eine drehschlüssige Mitnahme des Bohrers durch die Futterbacken gewährleistet ist, dann aber ein weiteres Eindringen verhindert werden muß, damit der Bohrer die Möglichkeit behält, relativ zu den Futterbacken geringe Axialbewegungen auszuführen, wie sie beim Schlagbohren zur optimalen Übertragung der Schlagwirkung durch den Bohrer erforderlich sind.

Der Erfindung liegt daher die Aufgabe zugrunde, ein Bohrfutter der eingangs genannten Art so auszubilden, daß es, ohne sich beliebig lockern zu können, eine begrenzte Nachspannung ermöglicht.

Diese Aufgabe wird nach der Erfindung dadurch gelöst, daß die Feder in Umfangsrichtung des Bohrfutters mit ihren Enden am Futterkörper einerseits und an der Sperrhülse andererseits festgelegt und in der dem Spannen des Bohrfutters entsprechenden Drehrichtung des Stellringes vorgespannt ist, und daß die den Verriegelungseingriff der Sperrhülse am Stellring ermöglichende längere Nut breiter als der Anschlagkopf ist, wobei das dadurch in Umfangsrichtung gebildete freie Spiel zwischen dem Anschlagkopf und der Sperrhülse deren das Bohrfutter nachspannende Drehbewegung ermöglicht und begrenzt.

Bei dem erfindungsgemäßen Bohrfutter läßt der Anschlagkopf zum Nachspannen einen begrenzten Drehhub der Sperrhülse und damit des mit ihr im Verriegelungseingriff stehenden Stellringes zu, wobei die Feder sowohl die Nachspannkraft aufbringt als auch die Sperrhülse im Verriegelungseingriff am Stellring hält. Im anfänglichen Spannzustand des Bohrers steht die Sperrhülse in der Ausgangsstellung ihres für die Nachspannung zur Verfügung stehenden Drehhubes. Arbeiten sich ausgehend von diesem anfänglichen Spannzustand die Futterbacken in den Bohrerschaft ein und lockert sich dadurch dessen Einspannung, so kann sich das Bohrfutter zunächst durch die Kraft der Feder nachspannen. Dabei wird die Sperrhülse durch die Feder verdreht, bis sie am Ende ihres Drehhubes vom Anschlagkopf festgehalten wird, wodurch weitere Nachspannbewegungen ausgeschlossen sind.

Um den für den Übergang des Anschlagkopfes zwischen den beiden Nuten auszuführenden axialen Verschiebungsweg der Sperrhülse möglichst kurz zu halten, können nach einem weiteren Vorschlag der Erfindung die Nuten an ihrem bohrerseitigen Ende eine freie Querverbindung aufweisen, deren Höhe in Längsrichtung der Nuten geringer als die axiale Länge des Anschlagkopfes ist. Um das Einlaufen des Anschlagkopfes
in die Nuten zu erleichtern, ist eine bevorzugte
Ausführungsform der Erfindung dadurch gekennzeichnet, daß die Nuten an ihrem bohrerseitigen
Ende keilartig auseinanderlaufende und dadurch
Führungsflächen für den Anschlagkopf bildende
Nutseitenwände aufweisen, und daß der Anschlagkopf mit entsprechend schräg verlaufenden seitlichen Längsflächen versehen ist. Weiter
empfiehlt es sich, die Anordnung so zu treffen,
daß zwischen beiden Nuten an deren bohrerseitigem Ende eine seitlich in die längere Nut vorstehende Nase vorgesehen ist, die dem Anschlagkopf gegen die Kraft der Feder anliegt, wenn sich
die Sperrhülse axial in einer Stellung befindet, in
der ihr Verriegelungseingriff am Stellring aufgehoben ist, und daß der Anschlagkopf in seiner der
Nase zugewandten seitlichen Längsfläche eine
Ausnehmung aufweist, in die die Nase bei am
Stellring im Verriegelungseingriff stehender
Sperrhülse eintreten kann. Die Ausnehmung ist
zweckmäßig von zwei etwa parallel zueinander
versetzten Teilen der seitlichen Längsfläche des
Anschlagkopfes gebildet, die ihrerseits etwa parallel zu der am Anschlagkopf zur Anlage kommenden Nasenstirnfläche verlaufen, während die
Verbindungsfläche zwischen diesen Flächenteilen parallel zu der den Nasenrücken bildenden
Fläche verläuft. Im Ergebnis wird durch diese
Flächenausbildung erreicht, daß sich der Anschlagkopf und die Nase an ihren unter der Kraft
der Feder jeweils aneinander liegenden Flächen
selbsttätig gegenseitig führen, wenn sich die
Sperrhülse unter der Kraft der Feder axial verstellt
oder gegen diese Federkraft axial verstellt wird.
Nach einem weiteren Vorschlag der Erfindung
kann der Anschlagkopf im Übergang zur Ausnehmung eine Kante bilden, von der die Nase abläuft,
sobald die Sperrhülse in den Verriegelungseingriff am Stellring eingetreten ist. Das hat den
Vorteil, daß die Nachspannwirkung der Sperrhülse sofort mit dem Eintritt in den Verriegelungseingriff am Stellring wirksam wird und nicht mehr
weiter durch die Nase und den Anschlagkopf
behindert werden kann. Für die Ausbildung des
Verriegelungseingriffs selbst empfiehlt es sich,
daß der Stellring eine der Sperrhülse zugewandte
Verzahnung aufweist, in welche die Sperrhülse
mit einer Gegenverzahnung eintritt, wobei die
Zahnflanken, an welchen die Sperrhülse und der
Stellring unter der Kraft der Feder gegenseitig zur
Anlage kommen, so geneigt sind, daß die Sperrhülse auf ihrem Weg bis zum vollständigen Verzahnungseingriff zugleich eine Verdrehung gegen
die Kraft der Feder erfährt.

Im folgenden wird die Erfindung an einem in
der Zeichnung dargestellten Ausführungsbeispiel
näher erläutert ; es zeigen :

Fig. 1 ein Bohrfutter nach der Erfindung im
Axialschnitt, teils in Seitenansicht,

Fig. 2 einen Schnitt in Richtung II-II durch das
Bohrfutter nach Fig. 1,

Fig. 3 einen Teilschnitt in Richtung III-III durch
das Bohrfutter nach Fig. 1, und zwar in den Teilfig. a) bis c) in drei die Wirkungsweise der
Sperrhülse erläuternden Betriebszuständen.

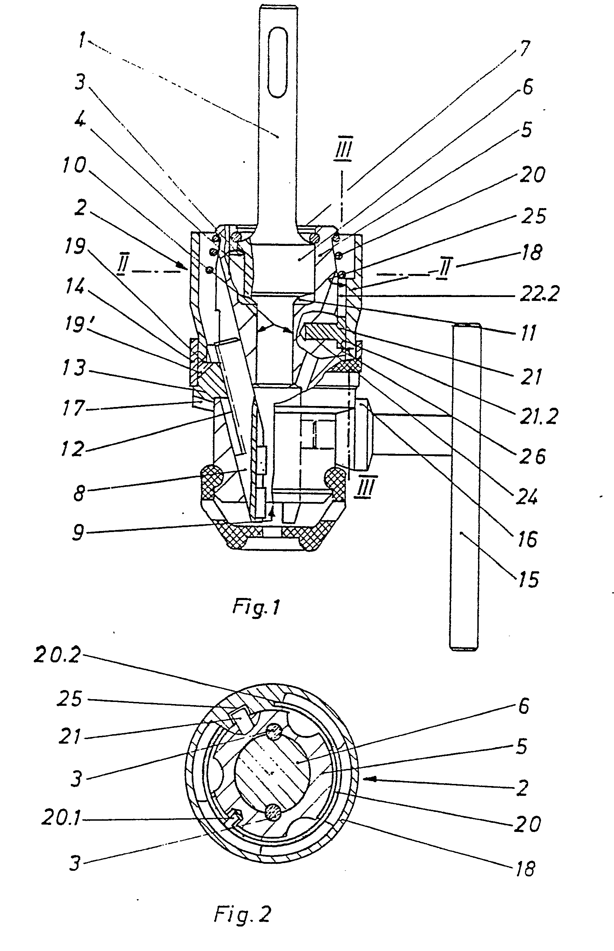

In der Zeichnung ist die Bohrspindel mit 1, das
von der Bohrspindel angetriebene Bohrfutter allgemein mit 2 bezeichnet. Das Bohrfutter 2 ist
drehschlüssig auf der Bohrspindel 1 angeordnet,
wozu Zapfen 3 dienen, die die axiale Verschiebbarkeit des Bohrfutters 2 auf der Bohrspindel 1
nicht behindern, weil die ihnen zugeordneten
Aufnahmen im Futterkörper 5 axial länger als die
Zapfen 3 sind. Spindelseitig sitzen die Zapfen 3 in
Ausnehmungen 4 eines Spindelbundes 6, an dem
das Bohrfutter 2 durch einen Federring 7 gesichert ist, der in einer Ringnut des Futterkörpers 5
liegt und den Spindelbund 6 hinterfaßt. Die im
Futterkörper 5 zentrisch verstellbaren Futterbacken 8 bilden gemeinsam eine Aufnahme 9 für
das nicht dargestellte Bohrwerkzeug. In dieser
Aufnahme 9 mündet ein im Futterkörper 5 vorgesehener axialer Durchgang 10, der im Ausführungsbeispiel von der Bohrspindel 1 selbst durchgriffen ist, in anderen Fällen aber auch von einem
in der hohlen Bohrspindel geführten Döpper
durchgriffen sein kann, so daß jedenfalls die
Schlagbewegung und Schlagwirkung von der
Bohrspindel 1 unmittelbar auf das Ende des in
der Aufnahme 9 zwischen den Futterbacken 8
gehaltenen Bohrers übertragen werden kann.
Dabei ist der Futterkörper 5 und mit ihm das
Bohrfutter 2 insgesamt von der Schlagwirkung
der Bohrspindel 1 dadurch entkoppelt, daß sich
der Spindelbund 6 in der für ihn im Futterkörper 5
vorgesehenen Aufnahme 11 und der Bohrer zwischen den Futterbacken 8 axial in beiden Richtungen geringfügig mit freiem Spiel verschieben
kann. Die Futterbacken 8 greifen mit einer Verzahnung 12 in das Innengewinde eines Stellrings 13,
der in einer Ringnut des Futterkörpers 5 drehbar
geführt ist. Um ihn in diese Ringnut einlegen zu
können, ist der Stellring 13 quergeteilt. Die beiden
Ringhälften werden von einer axial über den
Stellring 13 geschobenen Stellhülse 14 zusammengehalten. Der Stellring 13 kann außer von
Hand mittels eines Spannschlüssels 15 betätigt
werden, der am Futterkörper 5 angesetzt werden
kann und ein Zahnritzel 16 aufweist, das in einen
Zahnkranz 17 des Stellrings 13 greift. Weiter ist
am Futterkörper 5 eine Sperrhülse 18 vorgesehen,
die axial verschiebbar geführt und in Umfangsrichtung begrenzt verdrehbar sowie in ihren Drehstellungen feststellbar ist. Diese Sperrhülse 18
besitzt an ihrem dem Stellring 13 zugewandten
Rand Zähne 19, welchen eine Verzahnung 19' am
Stellring 13 zugeordnet ist. In ihrer in Fig. 1 und
3c dargestellten, unter der Kraft einer Feder 20
gegen den Stellring 13 vorgeschobenen Stellung
der Sperrhülse 18 greifen ihre Zähne 19 in die
Verzahnung 19' des Stellrings 13 und sperren
dadurch den Stellring 13 gegen Verdrehen. Um
den Stellring 13 verdrehen zu können, muß die
Sperrhülse 18 gegen die Kraft der Feder 20 axial
zurückgeschoben werden, damit die Zähne 19
der Sperrhülse 18 außer Eingriff mit der Verzahnung 19' am Stellring 13 gelangen. Um die Sperrhülse 18 in dieser rückwärtigen Stellung zu halten und ihre Drehbewegung zu begrenzen, ist am Futterkörper 5 mindestens ein Anschlagkopf 21 vorgesehen, der in eine Aussparung in der Wand der Sperrhülse 18 greift. Diese Aussparung ist aus zwei nebeneinander verlaufenden, verschieden langen axialen Nuten 22.1, 22.2 gebildet. An dem dem Stellring 13 zugewandten Ende sind die Nuten 22.1, 22.2 für den Eintritt des Anschlagkopfes 21 offen. Um diesen Eintritt wahlweise in eine der Nuten 22.1, 22.2 zu ermöglichen, ist die Sperrhülse 18 auf dem Futterkörper 5 so verdrehbar, daß entweder die eine oder die andere der beiden Nuten 22.1, 22.2 mit dem Anschlagkopf 21 axial fluchtet. Der Anschlagkopf 21 selbst ist in Längsrichtung der Nuten 22.1, 22.2 verlängert und bildet mit seinen seitlichen Längsflächen 30.1 bis 30.4 Anschlagflächen für die Nutseitenwände 23.1 bis 23.5. Im einzelnen bildet der Anschlagkopf 21 das Ende eines Stiftes 24, der radial in eine Bohrung des Futterkörpers 5 eingesteckt ist und den Anschlagkopf 21 am Futterkörper 5 verankert. Radial nach außen ist der Anschlagkopf 21 durch Anlage am Boden 25 der Nuten 22.1, 22.2 gesichert. Eine Verdrehungssicherung für den Anschlagkopf 21 wird dadurch erhalten, daß der Anschlagkopf 21 am bohrerseitigen Ende eine ebene Stirnfläche 21.2 aufweist, mit der der Anschlagkopf 21 einer Schulter 26 des Futterkörpers 5 verdrehungssicher aufsitzt. Die längere 22.2 der beiden Nuten ist an beiden Enden axial offen. Im übrigen sind die Nuten 22.1, 22.2 an ihren bohrerseitigen Enden mit einer freien Querverbindung 27 versehen, deren Höhe in Längsrichtung der Nuten 22.1, 22.2 geringer als die axiale Länge des Anschlagkopfes 21 ist. Die der Querverbindung 27 beidseits gegenüberliegenden Teile 23.1, 23.4 der äußeren Seitenwand beider Nuten 22.1, 22.2 bilden für den Anschlagkopf 21 Anschläge, die den Drehbereich der Sperrhülse 18 begrenzen.

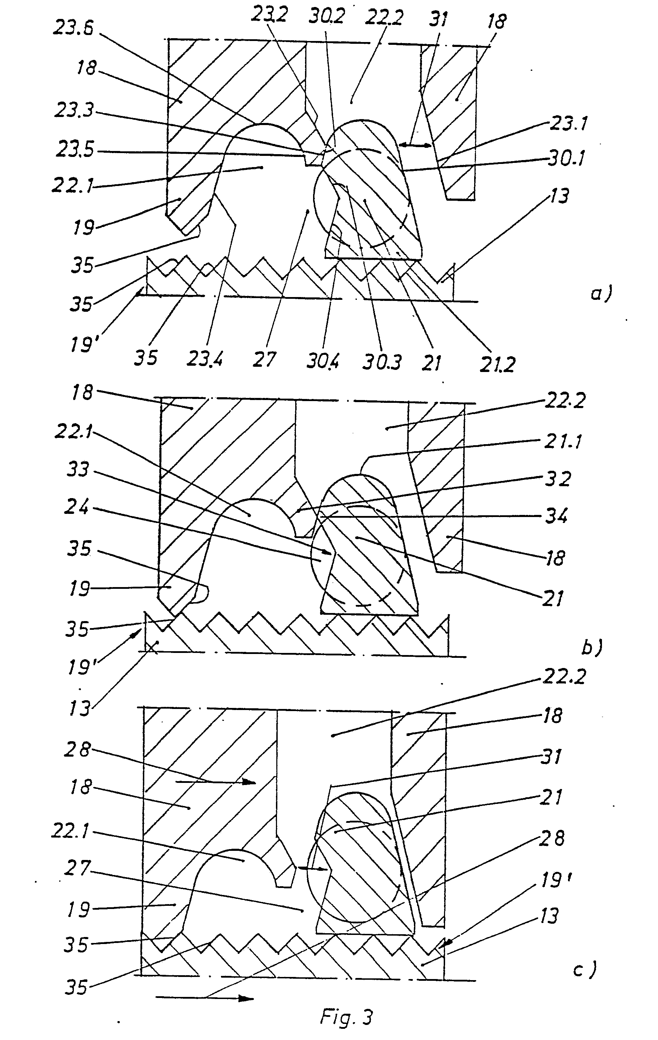

Die Feder 20 ist in Umfangsrichtung des Bohrfutters mit ihren Enden 20.1, 20.2 am Futterkörper 5 einerseits und an der Sperrhülse 18 andererseits festgelegt und in der dem Spannen des Bohrfutters entsprechenden Drehrichtung des Stellringes 13 (Pfeil 28 in Fig. 3c)) vorgespannt. Die den Verriegelungseingriff der Sperrhülse 18 am Stellring 13 ermöglichende längere Nut 22.2 ist breiter als der Anschlagkopf 21, so daß das dadurch in Umfangsrichtung gebildete, jeweils durch die Pfeile 31 angedeutete freie Spiel zwischen dem Anschlagkopf 21 und der Sperrhülse 18 deren das Bohrfutter 2 nachspannende Drehbewegung ermöglicht und begrenzt. Zwischen beiden Nuten 22.1, 22.2 ist an deren bohrerseitigem Ende eine seitlich in die längere Nut 22.2 etwas vorstehende Nase 32 vorgesehen, die dem Anschlagkopf 21 gegen die Kraft der Feder 20 anliegt, wenn sich die Sperrhülse 18 entsprechend der Darstellung in Fig. 3a) axial in einer Stellung befindet, in der ihr Verriegelungseingriff am Stellring 13 aufgehoben ist. Der Anschlagkopf 21 besitzt in seiner der Nase 32 zugewandten seitlichen Längsfläche eine Ausnehmung 33, in die die Nase 32 eintreten kann, wenn sich die Sperrhülse 18 axial weiter gegen den Stellring 13 bis zum vollständigen Verriegelungseingriff verschiebt (Fig. 3c)). Die Ausnehmung 13 ist von zwei etwa parallel zueinander versetzten Teilen 30.2, 30.4 der seitlichen Längsfläche des Anschlagkopfes 21 gebildet. Diese beiden Flächenteile 30.2, 30.4 verlaufen ihrerseits etwa parallel zu der am Anschlagkopf 21 zur Anlage kommenden Nasenstirnfläche 23.3. Die Verbindungsfläche 30.3 zwischen diesen Flächenteilen 30.2, 30.4 verläuft parallel zu der den Nasenrücken bildenden Fläche 23.2. Der Anschlagkopf 21 bildet im Übergang zur Ausnehmung 33 eine Kante 34, von der die Nase 32 in dem Augenblick abläuft, in dem die Sperrhülse 18 in den Verriegelungseingriff am Stellring 13 gerade eingetreten ist (Fig. 3b)). Die Zahnflanken 35, an welchen die Sperrhülse 18 und der Stellring 13 unter der Kraft der Feder 20 gegenseitig zur Anlage kommen, sind so geneigt, daß die Sperrhülse 18 auf ihrem Weg bis zum vollständigen Verzahnungseingriff zugleich eine Verdrehung gegen die Kraft der Feder 20 erfährt, wie dies aus einem Vergleich der Fig. 3b) und 3c) unmittelbar ersichtlich ist.

In den in der Zeichnung dargestellten Betriebszuständen drückt die Feder 20 die Sperrhülse 18 ohne wesentliche Behinderung durch den Anschlagkopf 21 axial gegen den Stellring 13, bis die Zähne 19 der Sperrhülse 18 und die Verzahnung 19′ des Stellrings 13 miteinander zum Eingriff kommen. Dabei kommt unter der Kraft der Feder 20 zunächst die Nasenstirnfläche 23.3 an der seitlichen Längsfläche 30.2 des Anschlagkopfes 2 zur Anlage (Fig. 3a)). Beim weiteren Verstellen der Sperrhülse 18 (Fig. 3b)) gelangen die Zähne 19 an der Verzahnung 19′ des Stellrings 13 zum Eingriff, während sich gleichzeitig die Nase 32 in der Kante 34 vom Anschlagkopf 2 löst. Über die Zahnflanken 35 wird die Sperrhülse 18 gegen die Vorspannung der Feder 20, also gegen den Pfeil 28, verdreht, bis der Verriegelungseingriff vollständig ist (Fig. 3c)). Dadurch entsteht zwischen der Nase 32 einerseits und dem ihr dann mit seiner Ausnehmung 33 gegenüberliegenden Anschlagkopf 2 andererseits ein freier Abstand, der einen entsprechenden Drehhub (Pfeil 31) in Richtung des Pfeiles 28, also im Sinne eines Nachspannens des Stellrings 13 ermöglicht. Eine Verdrehung in entgegengesetzter Richtung ist durch die dann am Anschlagkopf 21 zur Anlage kommende äußere Nutseitenwand 23.1 der längeren Nut 22.2 ausgeschlossen. — Wird die Sperrhülse 18 gegen den Druck der Feder 20 axial soweit zurückgeschoben, daß die Nase 32 über dem oberen abgerundeten Ende 21.1 des Anschlagkopfes 21 liegt, so kann die Sperrhülse 18 soweit verdreht werden, daß die kürzere Nut 22.1 mit dem Anschlagkopf 21 fluchtet und der Anschlagkopf 21 in diese kürzere Nut 22.1 axial eintritt, wenn die Sperrhülse 18 losgelassen wird und sich unter der Kraft der Feder 20 vorverschiebt. Verdrehungen der Sperrhülse 18 sind dabei durch Anschlag der Nutseitenflächen 23.4, 23.5 am Anschlagkopf 21 ausgeschlossen. Jedoch wird dies Vorverschiebung durch Anschlag des oberen Nutendes 23.6 am Anschlagkopf 21 bereits in einer Stellung beendet, in der die Sperrhülse 18 noch außer Eingriff am Stellring 13 steht. Um beim Wechseln der Nuten 22.1, 22.2 das Einlaufen des Anschlagkopfes 21 in die Nuten zu erleichtern, laufen die Nutseitenwände 23.1, 23.3, 23.5 und 23.4 keilartig auseinander und bilden dadurch für den Anschlagkopf 21 ihn einfangende schräge Führungsflächen. Gleiches gilt für die ihnen gegenüberliegenden Flächenteile 30.1, 30.2 des Anschlagkopfes 21. Dadurch wird auch erreicht, daß der Anschlagkopf 21 an den Nutseitenwänden 23.1, 23.4 bzw. der Nasenstirnfläche 23.3 und Nasenrückenfläche 23.2 zur flächigen Anlage aneinander kommen. Eine solche Gestaltung des Anschlagkopfes 21 vergrößert auch dessen der Schulter 26 aufsitzende Stirnfläche 21.2 und verbessert dadurch seine Verdrehsicherung.

**Patentansprüche**

1. Bohrfutter mit einem an eine Bohrspindel anschließbaren Futterkörper (5), in dem Futterbacken (8) geführt sind, die durch einen am Futterkörper (5) drehbar und axial unverschiebbar geführten Stellring (13) verstellbar sind, und mit einer am Futterkörper (5) axial verschiebbaren und in Drehrichtung begrenzt verstellbaren Sperrhülse (18) zum Verriegeln des Stellrings (13), wobei die Sperrhülse (18) in Verschiebungsrichtung gegen den Stellring (13) unter der Kraft einer Feder (20) steht und am Futterkörper (5) mindestens ein Anschlagkopf (21) vorgesehen ist, der in eine in der Wand der Sperrhülse (18) vorgesehene Aussparung greift, die aus zwei nebeneinander verlaufenden, verschieden langen axialen Nuten (22.1, 22.2) gebildet ist, die an ihrem dem Stellring (13) zugewandten Ende für den Eintritt des Anschlagkopfes (21) offen sind, wozu die Sperrhülse (18) auf dem Futterkörper (5) so verdrehbar ist, daß entweder die eine oder die andere der beiden Nuten (22.1, 22.2) mit dem Anschlagkopf (21) axial fluchtet, und wobei der Anschlagkopf (21) in Längsrichtung der Nuten (22.1, 22.2) verlängert ist und mit seinen seitlichen Längsflächen (30.1, 30.2, 30.3, 30.4) Anschläge für die Nutenseitenwände (23.1, 23.2, 23.3, 23.4, 23.5) bildet, dadurch gekennzeichnet, daß die Feder (20) in Umfangsrichtung des Bohrfutters mit ihren Enden (20.1, 20.2) am Futterkörper (5) einerseits und an der Sperrhülse (13) andererseits festgelegt und in der dem Spannen des Bohrfutters entsprechenden Drehrichtung (Pfeil 28) des Stellringes (13) vorgespannt ist, und daß die den Verriegelungseingriff der Sperrhülse (18) am Stellring (13) ermöglichende längere Nut (22.2) breiter als der Anschlagkopf (21) ist, wobei das dadurch in Umfangsrichtung gebildete freie Spiel (Pfeil 31) zwischen dem Anschlagkopf (21) und der Sperrhülse (18) deren das Bohrfutter nachspannende Drehbewegung ermöglicht und begrenzt.

2. Bohrfutter nach Anspruch 1, dadurch gekennzeichnet, daß die Nuten (22.1, 22.2) an ihrem bohrerseitigen Ende eine freie Querverbindung (27) aufweisen, deren Höhe in Längsrichtung der Nuten (22.1, 22.2) geringer als die axiale Länge des Anschlagkopfes (21) ist.

3. Bohrfutter nach Anspruch 1 oder 2, dadurch gekennzeichnet, daß die Nuten (22.1, 22.2) an ihrem bohrerseitigen Ende keilartig auseinander laufende und dadurch Führungsflächen für den Anschlagkopf (21) bildende Nutseitenwände (23.1 bis 23.5) aufweisen, und daß der Anschlagkopf (21) mit entsprechend schräg verlaufenden seitlichen Längsflächen (30.1 bis 30.4) versehen ist.

4. Bohrfutter nach einem der Ansprüche 1 bis 3, dadurch gekennzeichnet, daß zwischen beiden Nuten (22.1, 22.2) an deren bohrerseitigem Ende eine in die längere Nut (22.2) seitlich vorstehende Nase (32) vorgesehen ist, die dem Anschlagkopf (21) unter der Kraft der Feder (20) anliegt, wenn sich die Sperrhülse (18) axial in einer Stellung befindet, in der ihr Verriegelungseingriff am Stellring (13) aufgehoben ist, und daß der Anschlagkopf (21) in seiner der Nase (32) zugewandten seitlichen Längsfläche eine Ausnehmung (33) aufweist, in die die Nase (32) bei am Stellring (13) im Verriegelungseingriff stehender Sperrhülse (18) eintreten kann.

5. Bohrfutter nach Anspruch 4, dadurch gekennzeichnet, daß die Ausnehmung (33) von zwei etwa parallel versetzten Teilen (30.2, 30.4) der seitlichen Längsflächen des Anschlagkopfes (21) gebildet ist, die ihrerseits etwa parallel zu der am Anschlagkopf (21) zur Anlage kommenden Nasenstirnfläche (23.3) verlaufen, und daß die Verbindungsfläche (30.3) zwischen diesen Flächenteilen (30.2, 30.4) parallel zu der den Nasenrücken bildenden Fläche (23.2) verläuft.

6. Bohrfutter nach Anspruch 4 oder 5, dadurch gekennzeichnet, daß der Anschlagkopf (21) im Übergang zur Ausnehmung (33) eine Kante (34) bildet, von der die Nase (32) abläuft, sobald die Sperrhülse (18) in den Verriegelungseingriff am Stellring (13) eingetreten ist.

7. Bohrfutter nach Anspruch 6, dadurch gekennzeichnet, daß der Stellring (13) eine der Sperrhülse (18) zugewandte Verzahnung (19') aufweist, in welche die Sperrhülse (18) mit Zähnen (19) eintritt, wobei die Zahnflanken (35), an welchen die Sperrhülse (18) und der Stellring (13) unter der Kraft der Feder (20) gegenseitig zur Anlage kommen, so geneigt sind, daß die Sperrhülse (18) auf ihrem Weg bis zum vollständigen Verzahnungseingriff zugleich eine Verdrehung gegen die Kraft der Feder (20) erfährt.

**Claims**

1. A drilling chuck comprising a chuck body (5) which can be connected to a drilling spindle and in which there are guided chuck jaws (8) which are adjustable by an adjusting ring (13) which is guided rotatably and axially non-slidably on the chuck body (5), and a locking sleeve (18) which is axially slidable on the chuck body (5) and which is limitedly displaceable in the direction of rotation, for locking the adjusting ring (13), wherein the locking sleeve (18) is subjected to the force of a spring (20) in the direction of displacement towards the adjusting ring (13) and provided on the chuck body (5) is at least one abutment head (21) engaging into a recess which is provided in the wall of the locking sleeve (18) and which is formed from two axial grooves (22.1, 22.2) which are of different lengths and which extend in juxtaposed relationship and which are open at their end towards the adjusting ring (13) for the entry of the abutment head (21), for which purpose the locking sleeve (18) is rotatable on the chuck body (5) in such a way that either one or the other of the two grooves (22.1, 22.2) is axially aligned with the abutment head (21) and wherein the abutment head (21) is elongated in the longitudinal direction of the grooves (22.1, 22.2) and with its lateral longitudinal surfaces (30.1, 30.2, 30.3, 30.4) forms abutments for the groove side walls (23.1, 23.2, 23.3, 23.4, 23.5) characterised in that the spring (20) is fixed in the peripheral direction of the drilling chuck with its ends (20.1, 20.2) to the chuck body (5) on the one hand and to the locking sleeve (13) on the other hand and is biased in the direction of rotation (arrow 28) of the adjusting ring (13), which corresponds to tightening of the drilling chuck, and that the longer groove (22.2) which permits the locking engagement of the locking sleeve (18) on the adjusting ring (13) is wider than the abutment head (21), wherein the free play (arrow 31) formed thereby in the peripheral direction, between the abutment head (21) and the locking sleeve (18), permits and limits the rotary movement thereof, for re-tightening the drilling chuck.

2. A drilling chuck according to claim 1 characterised in that at their ends towards the drill the grooves (22.1, 22.2) have a free transverse communication (27) whose height, in the longitudinal direction of the grooves (22.1, 22.2), is less than the axial length of the abutment head (21) .

3. A drilling chuck according to claim 1 or claim 2 characterised in that, at their end towards the drill, the grooves (22.1, 22.2) have groove side walls (23.1 to 23.5) which diverge in a wedge-like configuration and thereby form guide surfaces for the abutment head (21) and that the abutment head (21) is provided with correspondingly inclinedly extending lateral longitudinal surfaces (30.1 to 30.4).

4. A drilling chuck according to one of claims 1 to 3 characterised in that provided between both grooves (22.1, 22.2) at their ends towards the drill is a projection (32) which projects laterally into the longer groove (22.2) and which bears against the abutment head (21) under the force of the spring (20) when the locking sleeve (18) is axially in a position in which its locking engagement on the adjusting ring (13) is released, and that, in its lateral longitudinal surface which is towards the projection (32), the abutment head (21) has a recess (33) into which the projection (32) can pass when the locking sleeve (18) is in locking engagement with the adjusting ring (13).

5. A drilling chuck according to claim 4 characterised in that the recess (33) is formed by two parts (30.2, 30.4) which are displaced in substantially parallel relationship, of the lateral longitudinal surfaces of the abutment head (21) which in turn extend substantially parallel to the end face (23.3) of the projection, which comes to bear against the abutment head (21), and that the connecting surface (30.3) between said surface parts (30.2, 30.4) extends parallel to the surface (23.2) forming the back of the projection.

6. A drilling chuck according to claim 4 or claim 5 characterised in that the abutment head (21), at the transition to the recess (33), forms an edge (34) from which the projection (32) moves away as soon as the locking sleeve (18) has moved into the condition of locking engagement on the adjusting ring (13).

7. A drilling chuck according to claim 6 characterised in that the adjusting ring (13) has a tooth arrangement (19') which is towards the locking sleeve (18) and into which the locking sleeve (18) passes with teeth (19), wherein the tooth flanks (35) at which the locking sleeve (18) and the adjusting ring (13) come into contact with each other under the force of the spring (20) are so inclined that, in its movement to a condition of complete tooth engagement, the locking sleeve (18) also experiences a rotational movement against the force of the spring (20).

**Revendications**

1. Mandrin de serrage équipé d'un corps de mandrin (5) pouvant être raccordé à une broche de perçage dans lequel sont guidées des mâchoires de serrage (8) qui peuvent être déplacées au moyen d'une bague de réglage (13) guidée sur le corps de mandrin (5) de façon à pouvoir tourner tout en restant immobile dans le sens axial, et d'une douille d'arrêt (18) qui peut être déplacée axialement sur le corps de mandrin (5) et de manière limitée dans la direction de rotation en vue du verrouillage de la bague de réglage (13), la douille d'arrêt (18) étant soumise à la force d'un ressort (20) dans le sens de déplacement en direction de la bague de réglage (13), et sur le corps de mandrin (5) étant prévue au moins une tête de butée (21) qui s'engage dans un évidement dans la paroi de la douille d'arrêt (18) lequel est constitué par deux rainures axiales (22.1, 22.2) s'étendant côte à côte sur des longueurs différentes et ouvertes à l'extrémité dirigée vers la bague de réglage (13) pour permettre l'engagement de la tête de butée (21), la douille d'arrêt (18) pouvant être tournée à cet effet sur le corps de mandrin (5) de façon que l'une ou l'autre des deux rainures (22.1, 22.2) soit alignée axialement avec la tête de butée (21) et la tête de butée (21) étant prolongée dans le sens longitudinal des rainures (22.1, 22.2) et formant avec ses faces longitudinales latérales (30.1, 30.2, 30.3, 30.4) des butées pour les parois latérales (23.1, 23.2, 23.3, 23.4, 23.5) des rainures, caractérisé par le fait que, dans le sens circonférentiel du mandrin de serrage, le ressort (20) est fixé avec ses extrémités (20.1, 20.2) sur le corps de mandrin (5), d'une part, et sur la douille d'arrêt (18), d'autre part, et qu'il est soumis à une précontrainte dans le sens de rotation (flèche 28) de la bague de réglage (13) correspondant au serrage du mandrin, et que la rainure plus longue (22.2) permettant la prise de verrouillage de la douille d'arrêt (18) sur la bague de réglage (13) est plus large que la tête de butée (21), le libre jeu (flèche 31) ainsi réalisé dans le sens circonférentiel entre la tête de butée (21) et la douille d'arrêt (18) autorisant et limitant le mouvement de rotation de celle-ci en vue du reblocage du mandrin de serrage.

2. Mandrin de serrage selon la revendication 1, caractérisé par le fait que les rainures (22.1, 22.2) présentent à leur extrémité du côté foret une liaison transversale libre (27) dont la hauteur dans le sens longitudinal des rainures (22.1, 22.2) est inférieure à la longueur axiale de la tête de butée (21).

3. Mandrin de serrage selon l'une des revendications 1 ou 2, caractérisé par le fait que les rainures (22.1, 22.2) présentent, à leur extrémité côté foret, des parois latérales (23.1 à 23.5) formant des surfaces qui s'écartent en forme de coin et assument ainsi une fonction de guidage pour la tête de butée (21), et que la tête de butée (21) est munie, sur le côté, de surfaces longitudinales latérales (30.1 à 30.4) inclinées de manière analogue.

4. Mandrin de serrage selon l'une quelconque des revendications 1 à 3, caractérisé par le fait que, entre les deux rainures (22.1, 22.2), à leur extrémité côté foret, est prévu un talon (32) qui dépasse latéralement dans la rainure plus longue (22.2) et est appliqué contre la tête de butée (21) contre la force du ressort (20) lorsque la douille d'arrêt (18) se trouve dans une position axiale dans laquelle sa prise de verrouillage sur la bague de réglage (13) est supprimée, et que la tête de butée (21) présente, dans sa surface longitudinale latérale dirigée vers le talon (32), un évidement (33) dans lequel le talon (32) peut s'engager lorsque la douille d'arrêt (18) est en prise de verrouillage sur la bague de réglage (13).

5. Mandrin de serrage selon la revendication 4, caractérisé par le fait que l'évidement (33) est constitué par deux éléments (30.2, 30.4) de la surface longitudinale latérale de la tête de butée (21) décalés à peu près parallèlement l'un par rapport à l'autre lesquels s'étendent à leur tour à peu près parallèlement à la face frontale (23.3) du talon qui vient s'appliquer contre la tête de butée (21), et que la surface de raccordement (30.3) entre ces éléments de surface (30.2, 30.4) est parallèle à la surface (23.2) qui forme le dos du talon.

6. Mandrin de serrage selon l'une des revendications 4 ou 5, caractérisé par le fait que la tête de butée (21) forme, dans la transition vers l'évidement (33), une arête (34) de laquelle le talon (32) se détache dès que la douille d'arrêt (18) est venue en prise de verrouillage sur la bague de réglage (13).

7. Mandrin de serrage selon la revendication 6, caractérisé par le fait que la bague de réglage (13) est munie d'une denture (19') dirigée vers la douille d'arrêt (18) dans laquelle la douille d'arrêt (18) s'engrène avec des dents (19), les flancs des dents (35) sur lesquels la douille d'arrêt (18) et la bague de réglage (13) viennent en contact sous la force du ressort (20) étant inclinés de telle façon que la douille d'arrêt (18) subit en même temps, durant son déplacement jusqu'à l'engrènement complet, une rotation contre la force du ressort (20).

Fig.1

Fig.2

1

Fig. 3